(19) **Europäisches Patentamt**
**European Patent Office**
**Office européen des brevets**

(11) **EP 3 144 333 A1**

(12) **EUROPEAN PATENT APPLICATION**

(43) Date of publication:
**22.03.2017  Bulletin 2017/12**

(51) Int Cl.:
***C08G 18/76*** *(2006.01)*       ***C08G 18/48*** *(2006.01)*

(21) Application number: **16188887.0**

(22) Date of filing: **15.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.09.2015   CN 201510613870**

(71) Applicant: **Covestro Deutschland AG**
**51373 Leverkusen (DE)**

(72) Inventors:
- **XI, Qiang**
  **Jingan District, Shanghai 200000 (CN)**
- **ZHENG, Chunlei**
  **Waigaoqiao, Pudong, Shanghai 200120 (CN)**

(74) Representative: **Levpat**
**c/o Covestro AG**
**Gebäude 4825**
**51365 Leverkusen (DE)**

(54) **A POLYURETHANE COMPOSITE ELEMENT AND THE PREPARATION PROCESS THEREOF**

(57)     The present invention relates to a polyurethane composite element comprising one or more gaps in which a polyurethane foam is filled, wherein the polyurethane foam has a density of 16-40 kg/m$^3$, a closed cell proportion of 50-90% determined according to ASTM D6226-2010 Standard Test, and the polyurethane foam is formed by applying a polyurethane composition into said gaps *in situ.* Another aspect of the present invention relates to a process of preparing a polyurethane composite element.

EP 3 144 333 A1

**Description**

**Technical Field**

One aspect of the present invention relates to a polyurethane composite element comprising one or more gaps in which a polyurethane foam is filled, and the polyurethane foam is formed by applying a polyurethane composition into said gaps *in situ*. Another aspect of the present invention relates to a process of preparing the polyurethane composite element.

**Background Art**

A hot melt adhesive is an EVA resin, which is widely used in the fields of household appliances and the like. A hot melt adhesive base resin is formed from the copolymerization of ethylene and vinyl acetate at high temperature and high pressure, it will melt into liquid at higher temperature, then casting to the gaps of the products, it will function as sealing effect after cooled and cured.

A one-component polyurethane foam (OCF) is a product of cross-linking between aerosol technology and polyurethane foam technology. It is a special polyurethane product of filling the components such as polyurethane prepolymer, foaming agent, catalyst and the like into a pressure-resistant aerosol can. When materials are ejected from the aerosol can, foam-like polyurethane materials will rapidly expand and come into the curing reaction with air or moisture in the contacted substrate to form a foam, and thereby producing sealing effect.

There are still needs for a two-component polyurethane foam and a process of using it for sealing in the prior art.

**Summary of the Invention**

One aspect of the present invention provides a polyurethane composite element comprising one or more gaps, wherein said one or more gaps are filled with a polyurethane foam having a density of 16-40 kg/m$^3$ and a closed cell proportion of 50-90% determined according to ASTM D6226-2010 Standard Test, and the polyurethane foam is formed by applying a polyurethane composition into said gaps *in situ*, wherein the polyurethane composition comprises:

A) an isocyanate component comprising one or more organic polyisocyanates;
B) an isocyanate-reactive component comprising:

b1) one or more polyether polyols having a hydroxyl value of 200-500 mgKOH/g and a functionality of 2-6;
b2) one or more foaming agents; and
b3) a siloxane foam stabilizer having an amount of 0.1-2 wt.%, based on 100% by total weight of the polyurethane composition.

In a preferred example of the present invention, the foaming agent is selected from water.

In another preferred example of the present invention, said foaming agent has an amount of 5-10 wt.%, based on 100% by total weight of the polyurethane composition.

In still another preferred example of the present invention, said polyurethane composition has a rising time of 6-12 seconds.

In yet another preferred example of the present invention, said polyurethane composite element is selected from: tank body of a refrigerator, building insulation board, door body and tank body of a refrigeration and insulation equipment, tank body of a refrigeration vehicle, tank body of a refrigeration container, insulation element of a refrigeration unit, or polyurethane insulation pipe.

Another aspect of the present invention provides a process of preparing a polyurethane composite element comprising steps of:

i) providing one or more gaps;
ii) applying a polyurethane composition into the gaps, wherein a polyurethane foam is formed from the polyurethane composition to fill the gaps, and the polyurethane foam has a density of 16-40 kg/m$^3$ and a closed cell proportion of 50-90% determined according to ASTM D6226-2010 Standard Test,

wherein said polyurethane composition comprises:

A) an isocyanate component comprising one or more organic polyisocyanates;
B) an isocyanate-reactive component comprising:

b1) one or more polyether polyols having a hydroxyl value of 200-500 mgKOH/g and a functionality of 2-6;
b2) one or more foaming agents; and
b3) a siloxane foam stabilizer having an amount of 0.1 to 2 wt.%, based on 100% by total weight of the polyurethane composition.

In a preferred example of the present invention, said foaming agent is selected from water.

In another preferred example of the present invention, said foaming agent has an amount of 5-10 wt.%, based on 100% by total weight of the polyurethane composition.

In still another preferred example of the present invention, said polyurethane composition has a rising time of 6-12 seconds.

In yet another preferred example of the present invention, said polyurethane composite element is selected from: tank body of a refrigerator, building insulation board, door body and tank body of a refrigeration and insulation equipment, tank body of a refrigeration vehicle, tank body of a refrigeration container, insulation element of a refrigeration unit, or polyurethane insulation pipe.

## Detailed Description

The present invention provides a polyurethane composite element sealed with polyurethane foam, which comprises of applying a polyurethane composition into the gaps of the composite element *in situ*, and after foamed and cured, the polyurethane composition forms a polyurethane foam and thereby sealing the gaps. Said polyurethane foam has a density of 16-40 kg/m$^3$ and a closed cell proportion of 50-90% determined according to ASTM D6226-2010 Standard Test, and said polyurethane foam is formed by applying a polyurethane composition into said gaps *in situ*, wherein said polyurethane composition comprises:

wherein said polyurethane composition comprises:

A) an isocyanate component comprising one or more organic polyisocyanates;
B) an isocyanate-reactive component comprising:

b1) one or more polyether polyols having a hydroxyl value of 200-500 mgKOH/g and a functionality of 2-6;
b2) one or more foaming agents; and
b3) a siloxane foam stabilizer having an amount of 0.1-2 wt.%, based on 100% by total weight of the polyurethane composition.

Said polyurethane foam has good toughness and adhesion as compared with a hot melt adhesive, and due to that the polyurethane foam has the property of air-permeability without the leakage of the materials, it can also relieve the pressure of the internal of articles to be filled.

Organic polyisocyanates of component A) that may be used for the preparation of polyurethane foam include organic diisocyanates, which may be any known aliphatic, cycloaliphatic or aromatic isocyanate used for the preparation of polyurethanes. Examples include, but are not limited to: 2,2'-, 2,4- and 4,4'-diphenyl methane diisocyanate; a mixture of monomeric diphenyl methane diisocyanate and polycyclic diphenyl methane diisocyanate homologues (polymeric MDI); isophorone diisocyanate (IPDI) or oligomers thereof; toluene diisocyanate (TDI), such as toluene diisocyanate isomers such as toluene-2,4- or 2,6-diisocyanate, or mixtures thereof; tetramethylene diisocyanate or oligomers thereof; hexamethylene diisocyanate (HDI) or oligomers thereof; naphthalene diisocyanate (NDI) or mixtures thereof.

In the example of the present invention, the organic polyisocyanates include isocyanates based on diphenyl methane diisocyanate, especially of those comprising polymeric MDI. The functionality of the organic polyisocyanate is preferably 1.9-3.5, in particular preferably 2.0-2.8. The viscosity of the organic polyisocyanate is preferably 5 to 600 mPas, in particular preferably 10-300 mPas determined according to DIN 53019-1-3 at 25 °C. The content of the isocyanate component may be 30-60 wt.%, based on 100% by total weight of said polyurethane composition.

Organic polyisocyanates may also be used in the form of polyisocyanate prepolymer. These polyisocyanate prepolymers may be obtained by reacting an excess amount of the aforementioned the organic polyisocyanate with a compound having at least two isocyanate-reactive groups at the temperature of, for example, 30 to 100 °C, preferably about 80 °C. The NCO content of the polyisocyanate prepolymer of the present invention is preferably 20 to 33wt.%, in particular preferably 25 to 32wt.%. Compounds having at least two isocyanate-reactive groups are well known to those skilled in the art, for example, the description in Chapter 3.1 of *"Plastics Handbook"* ("Kunststoffhandbuch, 7, Polyurethanes", Carl Hanser-Verlag, 3$^{rd}$ edition, 1993).

In the present invention, the polyether polyol that may be used as component b1) has a hydroxyl value of 200 to 500 mgKOH/g, preferably 250 to 350mgKOH/g, and a functionality of 2-6, preferably 3.9-5.30. The content of the polyether polyol may be 30 wt.%-90 wt.%, based on 100% by total weight of said polyurethane composition.

Said polyether polyol may be prepared by known processes, for example, prepared by reacting an olefin oxide with an initiator in the presence of a catalyst. Said catalyst is preferably, but not limited to, alkaline hydroxide, alkaline alkoxide, antimony pentachloride, boron fluoride etherate, or a mixture thereof. Said olefin oxide is preferably, but not limited to, tetrahydrofuran, ethylene oxide, propylene oxide, 1,2-butylene oxide, 2,3-butylene oxide, styrene oxide, or a mixture thereof, in particular preferably ethylene oxide and/or propylene oxide. Said initiator is preferably, but not limited to, polyhydroxy compound or polyamine compound, said polyhydroxy compound is preferably, but not limited to, water, ethylene glycol, 1,2-propanediol, 1,3-propanediol, diethylene glycol, trimethylolpropane, glycerol, bisphenol A, bisphenol S or a mixture thereof; said polyamine compound is preferably, but not limited to, ethylene diamine, propylene diamine, butylene diamine, hexamethylene diamine, diethylenetriamine, tolylenediamine or a mixture thereof. The polyether polyol may also be an unsaturated polyether polyol.

The polyurethane composition that may be used in the present invention may further comprises a foaming agent, said foaming agent may be selected from a variety of physical foaming agents or chemical foaming agents, which is preferably, but not limited to, water, halogenated hydrocarbon, hydrocarbon compound, gas. Said halogenated hydrocarbon is preferably, but not limited to, monochlorodifluoromethane, dichloromonofluoromethane, dichlorofluoromethane, trichlorofluoromethane, or a mixture thereof. Said hydrocarbon compound is preferably, but not limited to, butane, pentane, cyclopentane, hexane, cyclohexane, heptane, or a mixture thereof. Said gas is preferably, but not limited to, air, $CO_2$, or $N_2$. Said foaming agent is in particular preferably water. In a preferred example of the present invention, said foaming agent is selected from water, and the amount thereof is 2-30 wt.%, preferably 5-10 wt.%, based on 100% by weight of said isocyanate-reactive component.

The polyurethane composition that may be used in the present invention further comprises a siloxane foam stabilizer b3). The amount of the foam stabilizer used is about 0.1-2wt.%, based on 100% by weight of said isocyanate-reactive component.

The polyurethane composition that may be used in the present invention may further comprise a catalyst. Said catalyst is preferably, but not limited to, amine catalyst, organic metal catalyst, or a mixture thereof. Said amine catalyst is preferably, but not limited to, triethylamine, tributylamine, triethylenediamine, N-ethyl morpholine, N,N,N',N'-tetramethyl-ethylene diamine, pentamethyldiethylenetriamine, N,N-methylaniline, N,N-dimethylaniline, or a mixture thereof. Said organic metal catalyst is preferably, but not limited to, organic tin compound, for example: tin(II) acetate, tin(II) octylate, tin ethylhexanoate, tin laurate, dibutyl tin oxide, dibutyl tin dichloride, dibutyl tin diacetate, dibutyl tin maleate, dioctyl tin diacetate, or a mixture thereof. The amount of said catalyst is 0.001-10 wt.%, based on 100% by weight of said isocyanate-reactive component.

According to the specific requirements, a person skilled in the art may also add other ingredients into said polyurethane composition, for example, but not limited to: cell-opening agents, anti-aging agents, pigments and other additives.

The weight ratio of the isocyanate component A) to the isocyanate-reactive component B) in the polyurethane composition is determined by NCO index X, wherein X is less than 100, preferably less than 80, and said NCO index X is defined by the following formula:

$$X(\%) = \frac{[\text{The mole number of the isocyanate group (NCO group) in component A}]}{[\text{The mole number of the isocyanate - reactive group in component B}]} \times 100\%$$

In the Examples of the present application, a polyurethane composite element refers to a composite element comprising the aforementioned sealing polyurethane foam, which may be tank body of a refrigerator, building insulation board, door body and tank body of a refrigeration and insulation equipment, tank body of a refrigeration vehicle, tank body of a refrigeration container, insulation element of a refrigeration unit, or polyurethane insulation pipe.

Another aspect of the present invention provides a process of preparing a polyurethane composite element comprising steps of:

    i) providing one or more gaps;

    ii) applying said polyurethane composition into said gaps, wherein a polyurethane foam is formed from the polyurethane composition to fill the gaps, and the polyurethane foam has a density of 16-40 kg/m³ and a closed cell proportion of 50-90% determined according to ASTM D6226-2010 Standard Test.

Wherein said gap is a space having a sectional aspect ratio of greater than 20, which may have a regular or irregular shape.

**Examples**

The present invention is further illustrated with the following specific Examples. However, those skilled in the art should understand that these examples are only used for the illustration of the present invention, but is not intended to limit the scope of the present invention.

Commercially available products used in the Examples are as follows:

N210, a polyether polyol, available from GPRO Group Zhongshan Chemical Plant, having a hydroxyl value of 100, a viscosity of 160 and a functionality of 2.0;

GB380, a polyether polyol, available from Shanghai Gao Qiao Petrochemical Corporation, having a hydroxyl value of 380, a viscosity of 12,000 and a functionality of 5.8;

AK-8805, a foam stabilizer, having a organic silicon content of 45-55 wt%, available from Jiangsu Maysta Chemical Co., LTD;

Dabco BL11, a polyurethane synthetic catalyst, available from Air Products and Chemicals (China) Co., Ltd;

Dabaco PC 8, a polyurethane synthetic catalyst, available from Air Products and Chemicals (China) Co., Ltd;

Desomdur® 44v20L, an isocyanate, having a NCO content of 31.5 wt%, available from Bayer MaterialScience (China) Co., Ltd.;

Plates used for assembling body shell of a refrigerator were selected to assemble body shell of a refrigerator, due to that the tolerance of the plate members, gaps with a width of about 2 mm were formed in the fit clearances and the bending fit clearances between each plates.

The components in Table 1 were mixed through a high-pressured gun head, and directly casting to the gaps of the body shell; the components foamed to form a low density PU foam and covered the gaps and the surrounding thereof, and thereby sealing the gaps.

Table 1: polyurethane foam composition and properties

| Component | Numerical value (pbw) |
| --- | --- |
| N210 | 20 |
| GB 380 | 80 |
| AK8805 | 2 |
| Dabaco BL11 | 0.6 |
| Dabaco PC 8 | 1 |
| water | 7.5 |
| 44V20L | 59.25 |
| Rising time | 8.5s |
| Foam breaking time | 39s |
| Core density | 22.0 kg/m$^3$ |
| adhesion | good |

The rising time started from the time of mixing the raw material, after the mixing being stopped, then to the time that the color of the feed suddenly turned white. The foam breaking time refers to the time starting from mixing the two materials, after the mixing being stopped, and then to the time that the foams started to broke on the surface of the generated foam.

Adhesion test adopted the process of testing the adhesion between the produced articles on the production site and the polyurethane foams; the polyurethane foam was injected onto the articles, after waiting the foam to cure, pulling manually to evaluate the adhesion; if the foam falls off automatically, it indicates poor adhesion; if the foam is easy to be torn, it indicates medium foam adhesion; and if the foam is partially torn, it indicates good foam adhesion.

**Claims**

1.   A polyurethane composite element comprising one or more gaps, wherein the gaps are filled with a polyurethane foam having a density of 16-40 kg/m$^3$ and a closed cell proportion of 50-90% determined according to ASTM D6226-2010 Standard Test, and the polyurethane foam is formed by applying a polyurethane composition into said gaps *in situ*, wherein the polyurethane composition comprises:

A) an isocyanate component comprising one or more organic polyisocyanates;
B) an isocyanate-reactive component comprising:

b1) one or more polyether polyols having a hydroxyl value of 200-500 mgKOH/g and a functionality of 2-6;
b2) one or more foaming agents; and
b3) a siloxane foam stabilizer having an amount of 0.1-2 wt.%, based on 100% by total weight of the polyurethane composition.

2. The polyurethane composite element according to claim 1, wherein the foaming agent is selected from water.

3. The polyurethane composite element according to claim 1 or 2, wherein the foaming agent has an amount of 5-10 wt.%, based on 100% by total weight of the polyurethane composition.

4. The polyurethane composite element according to claim 1, wherein the polyurethane composition has a rising time of 6-12 seconds.

5. The polyurethane composite element according to claim 1, wherein the polyurethane composite element is selected from: tank body of a refrigerator, building insulation board, door body and tank body of a refrigeration and insulation equipment, tank body of a refrigeration vehicle, tank body of a refrigeration container, insulation element of a refrigeration unit, or polyurethane insulation pipe.

6. A process of preparing a polyurethane composite element comprising steps of:

i) providing one or more gaps;
ii) applying a polyurethane composition into said gaps, wherein a polyurethane foam is formed from the polyurethane composition to fill said gaps, and said polyurethane foam has a density of 16-40 kg/m$^3$ and a closed cell proportion of 50-90% determined according to ASTM D6226-2010 Standard Test, wherein said polyurethane composition comprises:

A) an isocyanate component comprising one or more organic polyisocyanates;
B) an isocyanate-reactive component comprising:

b1) one or more polyether polyols having a hydroxyl value of 200-500 mgKOH/g and a functionality of 2-6;
b2) one or more foaming agents; and
b3) a siloxane foam stabilizer having an amount of 0.1-2 wt.%, based on 100% by total weight of the polyurethane composition.

7. The process according to claim 6, wherein the foaming agent is selected from water.

8. The process according to claim 6 or 7, wherein the foaming agent has an amount of 5-10 wt.%, based on 100% by total weight of said polyurethane composition.

9. The process according to claim 6, wherein the polyurethane composition has a rising time of 6-12 seconds.

10. The process according to claim 6, wherein the polyurethane composite element is selected from: tank body of a refrigerator, building insulation board, door body and tank body of a refrigeration and insulation equipment, tank body of a refrigeration vehicle, tank body of a refrigeration container, insulation element of a refrigeration unit, or polyurethane insulation pipe.

**EP 3 144 333 A1**

Europäisches Patentamt

European Patent Office

Office européen des brevets

# EUROPEAN SEARCH REPORT

Application Number

EP 16 18 8887

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/058436 A1 (MAUTINO V MICHAEL [US] ET AL) 6 March 2008 (2008-03-06) * paragraphs [0036] - [0037] * * examples 2,6,8,9 * * page 4; table 1 * | 1-10 | INV. C08G18/76 C08G18/48 |
| X | US 2004/054022 A1 (OHNUMA YOSHIYUKI [JP] ET AL) 18 March 2004 (2004-03-18) * paragraphs [0035] - [0036] * * examples 1-5; table 1 * * paragraph [0009] * | 1-10 | |
| X | US 2004/186194 A1 (JOERN KUESTER [IT] ET AL) 23 September 2004 (2004-09-23) * paragraphs [0038], [0040], [0046] * * example 1; table 1 * * Foam No. 1 to 5 * | 1-10 | |
| X | US 2007/254973 A1 (EMGE ANDREAS [DE] ET AL) 1 November 2007 (2007-11-01) * example 21; table 8 * * paragraphs [0181], [0195], [0196] * | 1-10 | |

TECHNICAL FIELDS SEARCHED (IPC)

C08G

The present search report has been drawn up for all claims

| Place of search | Date of completion of the search | Examiner |
|---|---|---|
| Munich | 3 November 2016 | Bergmeier, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

7

## ANNEX TO THE EUROPEAN SEARCH REPORT
## ON EUROPEAN PATENT APPLICATION NO.

EP 16 18 8887

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2016

| Patent document cited in search report | | Publication date | Patent family member(s) | | | Publication date |
|---|---|---|---|---|---|---|
| US 2008058436 | A1 | 06-03-2008 | AT | 529460 | T | 15-11-2011 |
| | | | BR | PI0704077 | A | 22-04-2008 |
| | | | CA | 2599090 | A1 | 29-02-2008 |
| | | | CN | 101134804 | A | 05-03-2008 |
| | | | DK | 1894955 | T3 | 06-02-2012 |
| | | | EP | 1894955 | A1 | 05-03-2008 |
| | | | ES | 2374977 | T3 | 23-02-2012 |
| | | | JP | 2008056927 | A | 13-03-2008 |
| | | | KR | 20080020557 | A | 05-03-2008 |
| | | | PT | 1894955 | E | 16-01-2012 |
| | | | US | 2008058436 | A1 | 06-03-2008 |
| US 2004054022 | A1 | 18-03-2004 | CN | 1487006 | A | 07-04-2004 |
| | | | HK | 1063811 | A1 | 08-06-2007 |
| | | | JP | 4154654 | B2 | 24-09-2008 |
| | | | JP | 2004107376 | A | 08-04-2004 |
| | | | US | 2004054022 | A1 | 18-03-2004 |
| US 2004186194 | A1 | 23-09-2004 | AT | 517136 | T | 15-08-2011 |
| | | | BR | 0211817 | A | 27-07-2004 |
| | | | CA | 2456119 | A1 | 13-03-2003 |
| | | | CN | 1547599 | A | 17-11-2004 |
| | | | EP | 1288239 | A1 | 05-03-2003 |
| | | | EP | 1421131 | A1 | 26-05-2004 |
| | | | ES | 2367254 | T3 | 31-10-2011 |
| | | | JP | 4227017 | B2 | 18-02-2009 |
| | | | JP | 2005501941 | A | 20-01-2005 |
| | | | KR | 20040029071 | A | 03-04-2004 |
| | | | MX | PA04001767 | A | 31-05-2004 |
| | | | PL | 207420 | B1 | 31-12-2010 |
| | | | RU | 2295543 | C2 | 20-03-2007 |
| | | | US | 2004186194 | A1 | 23-09-2004 |
| | | | WO | 03020784 | A1 | 13-03-2003 |
| US 2007254973 | A1 | 01-11-2007 | AT | 412681 | T | 15-11-2008 |
| | | | CN | 1946757 | A | 11-04-2007 |
| | | | DE | 102004017294 | A1 | 20-10-2005 |
| | | | DK | 1742978 | T3 | 16-02-2009 |
| | | | EP | 1742978 | A1 | 17-01-2007 |
| | | | ES | 2314649 | T3 | 16-03-2009 |
| | | | JP | 4959549 | B2 | 27-06-2012 |
| | | | JP | 2007531809 | A | 08-11-2007 |
| | | | KR | 20070006871 | A | 11-01-2007 |
| | | | PT | 1742978 | E | 27-11-2008 |
| | | | SI | 1742978 | T1 | 28-02-2009 |
| | | | US | 2007254973 | A1 | 01-11-2007 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 16 18 8887

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2016

| Patent document cited in search report | Publication date | Patent family member(s) | Publication date |
|---|---|---|---|
| | | WO  2005097863 A1 | 20-10-2005 |

For more details about this annex : see Official Journal of the European Patent Office, No. 12/82